# EUROPEAN PATENT SPECIFICATION

(11) **EP 1 161 879 B1**
(45) Date of publication and mention of the grant of the patent: **09.11.2005**
(21) Application number: 01201645.7
(22) Date of filing: 07.05.2001
(51) Int. Cl.: A23D 9/007, A23D 7/00, A23G 9/02, A23G 1/00, A23G 3/00, A23L 1/24, A23L 1/39

(54) **Blends of ursolic acid/oleanolic acid**
Ursolsäure und Oleanolsäure enthaltende Mischungen
Mélanges d'acide ursolique et d'acide oléanolique

(30) Priority: 05.06.2000 EP 00304753
(43) Date of publication of application: 12.12.2001
(73) Proprietor: LODERS CROKLAAN B.V., 1521 AZ Wormerveer (NL)
(72) Inventor: Beindorff, Christiaan, Unilever Res. Vlaardingen, 3133 AT Vlaardingen (NL); Cain, Frederick William, Loders Croklaan B.V., 1521 AZ Wormerveer (NL); Pierce, John Hugh, Unilever Res. Colworth, Bedfordshire MK44 1LQ (GB); Schmid, Ulrike, 1521 AZ Wormerveer (NL); Schweitzer, Erik, 1521 AZ Wormerveer (NL); van Straalen, Jeroen Nicolaas M., 1521 AZ Wormerveer (NL)
(74) Representative: Stevens, Ian Edward

(56) References cited:
- EP-A- 0 555 484
- EP-A- 1 123 659
- DE-B- 1 152 221
- US-A- 5 948 460
- PATENT ABSTRACTS OF JAPAN vol. 1997, no. 06, 30 June 1997 (1997-06-30) -& JP 09 040689 A (NIPPON FLOUR MILLS CO LTD), 10 February 1997 (1997-02-10)
- CROTEAU R ET AL: "SEED LIPIDS THE AMERICAN CRANBERRY (VACCINIUM MACROCARPON)" PHYTOCHEMISTRY,PERGAMON PRESS,GB, vol. 8, no. 11, 1969, pages 2219-2222, XP000929275 ISSN: 0031-9422
- DATABASE WPI Section Ch, Week 199321 Derwent Publications Ltd., London, GB; Class D13, AN 1993-174355 XP002180894 & SU 1 738 215 A (GOSAGROPROM SCI PRODN ASSOC), 7 June 1992 (1992-06-07)
- PATENT ABSTRACTS OF JAPAN vol. 1997, no. 05, 30 May 1997 (1997-05-30) -& JP 09 020674 A (LOTTE CO LTD), 21 January 1997 (1997-01-21)
- BISHOP D G ET AL: "LIPID COMPOSITION OF SWEET CHERRIES" PHYTOCHEMISTRY,PERGAMON PRESS,GB, vol. 16, no. 1, 1977, pages 67-68, XP000929274 ISSN: 0031-9422
- BOCK W ET AL: "BESTANDTEILE DER AUS APFELTROCKENTRESTERN GEWINNBAREN TRITERPENFRAKTION" DIE NAHRUNG,VCH VERLAGSGESELLSCHAFT, WEINHEIM,XX, vol. 10, no. 5, 1966, pages 409-412, XP000929284 ISSN: 0027-769X
- DATABASE WPI Section Ch, Week 198208 Derwent Publications Ltd., London, GB; Class D23, AN 1982-15169E XP002152549 & SU 827 066 A (BOTANY INST), 7 May 1981 (1981-05-07)
- SOUSA MENEZES DE F ET AL: "CHEMICAL CONSTITUENTS FROM MARSYPIANTHES CHAMAEDRYS" ANAIS DA ACADEMIA BRASILEIRA DE CINCIAS,ACADEMIA BRASILEIRA DE CINCIAS, RIO DE JANEIRO,BR, vol. 70, no. 4, 1998, pages 761-766, XP000929286 ISSN: 0001-3765

## Description

Ursolic acid and oleanolic acid are known compounds that are also known for their health effects;.references wherein these effects are disclosed are eg JP 09/040 689; JP 09/ 067 249; CN 1 085 748; JP 1 039 973; JP 03/287 531; JP 03/287 430; EP 774 255; JP 07/258 098; JP 07/048 260; JP 01/132 531; FR 2 535 203; and JP 1 207 262.
Compositions comprising ursolic acid and oleanolic acid in weight ratios of 1:99 to 99:1 can be obtained by extracting natural sources like fruit skins or herbs, in particular by extracting skins of apples, pears, cranberries,cherries and prunes. The extracts so obtained contain ursolic acid and oleanolic acid in amounts of about 5-60 % and in weight ratios mentioned above. However these extracts haves a major drawback ie the extracts display a severe negative off flavour and as the components are intended to be used as health components in food products and the consumer does not appreciate a negative off flavour while consuming his food it would be a main advantage when mixtures of these components could be obtained containing sufficient amounts of ursolic acid and oleanolic acid to make them useful for application in foods as health component and that do not display the negative off flavour of the products available so far.

We studied whether we could obtain such products. In this study we found that the negative off flavour of the ursolic acid/oleanolic acid mixture is due to the presence of natural apolar and/or low molecular weight components in the natural extracts known so far. The apolar components being defined as that fraction of an extract from fruit skins that is eluted from a polar silica gel column, preferably with a Alltech Econoshpere Silica HPLC column (150*4.6 mm, 5 µm) with an eluent, preferably being either a mixture of hexane/toluene (50:50) or a mixture of toluene/ethylacetate/formic acid (500/200/16), in 0-7 min. Low molecular weight components are detected by GC with a apolar column, preferably a Chrompack SIMDIST (10m*0.53mm, 0.1 µm filmthickness) or a Quadrex DB-5 (10m*0.53mm, 0.1 µm filmthickness) and a temperature program, preferably starting with 120 oC (1 min); then 20oC/min until 325 oC, then 5 oC/min until 350 oC (5 min) with retention times from 0.5-7 min. The preferred used carrier gas is hydrogen with a pressure of 15 psi.

We found a method wherewith the amount of these apolar and/or low molecular weight components could be reduced considerably i.e. to below a level that would result in a negative off flavour impression. The result of this method is a mixture comprising ursolic acid and oleanolic acid in a weight ratio of 1:99 to 99:1, preferably 5:95 to 95:5, most preferably 15:85 to 85:15 wherein the mixture contains less than 20 wt %, preferably less than 10 wt %, most preferably 1 to 6 wt % of the natural apolar and/or low molecular weight components as present in natural extracts for ursolic acid and oleanolic acid. The apolar and/or low molecular weight components were found to be components belonging to the class of hydrocarbons, alcohols, fatty acids, triglycerides, ketones and carbohydrates.

Although the above mix could be used as such in food products it is preferred to use it as a blend with other components in particular as a blend with glycerides, preferably triglycerides. Therefore our invention concerns blends of a health component and a glyceride wherein the health component is the mixture disclosed above and which blend contains 1 to 99 wt %, preferably 5-80 wt % of one or more components selected from mono-, di-, and triglycerides as the glyceride.
The glyceride part of this blend preferably displays a solid fat content masured by NMR-pulse on a non-stabilised fat at the temperature indicated of :
5 to 90 at 5 oC
2 to 80 at 20 oC and
less than 15,preferably less than 10 at 35 oC.
The solid fat content is measured by the well known NMR - pulse technique on a fat that is not stabilised, this means that the measurement was performed on a fat that was subjected to the following treatment:
Melt at 80 oC, keep it at 80 oC for 15 min, cool it to 0 oC and keep it at 0 oC for 30 min, heat it to measuremt temperature and keep it thereon for 30 min and measure the N-value at this temperature.

Preferred blends that are good applicable in food products are blends comprising components A, B and C, wherein:
A = the health composition according to the invention and as formulated in claims 1 or 2
B = a solid fat with an N20 of more than 20 , preferably more than 45 , most preferably more than 60 and
C = a fat having at least 40 wt % of fatty acids with 18 C-atoms and having one to three double bonds, in particular fish oils, fish oil concentrates or glycerides from conjugated linoleic acid;

A being present in amounts of more than 0.1 wt %, preferably 0.1 to 20 wt %, most preferably 0.2 to 10 wt % B being present in amounts of 8 to 90 wt %, preferably 25 to 75 wt %, most preferably 40 to 70 wt % and
C being present in amounts of 0 to 85 wt %, preferably 15 to 65 wt %, most preferably 20 to 50 wt %.

In these blends the fat component B is preferably selected from the group consisting of palm oil; palm oil fractions; coccoa butter equivalents; palm kernel oil; fractions of palm kernel oil; hardened vegetable oils such as hardened palm oil; hardened fractions of palm oil; hardened soybean oil; hardened sunflower oil; hardened rape seed oil; hardened fractions of soybean oil; hardened fractions of rapeseed oil; hardened fractions of sunflower oil; mixtures of one or more of these oils and interesterified mixtures thereof.

Fat component C in general will be a liquid oil and is preferably selected from the group consisting of sunflower oil; olive oil; soybean oil; rape seed oil; palm oil olein; cotton seed oil; olein fractions from vegetable oils; high oleic vegetable oils such as HOSF (=high oleic sunflower oil) or HORP (=high oleic rape seed oil); fish oils; fish oil concentrates and CLA-glycerides.

The blends comprising components A, B and C as disclosed above have excellent properties for application in food products containing a fat phase.

The blends can also contain other known micronutients such as vitamines and minerals. It was however found that it was very beneficial if the blends also contain isoflavones and/or flavones in amounts corresponding with 0.005 to 5 % of the total amount of ursolic acid and oleanolic acid. In this way compositions are obtained that combine all the health aspects from the ursolic acid and oleanolic acid with the known health aspects from isoflavones respectively flavones (in particular those concerning women's health, in particular for postmenopausal women).

The blends according to the invention can be used in food products to provide the health aspects to the food product without giving a negative taste. Therefore part of our invention are also food products with a fat phase comprising at least partly the blend according to the invention and as formulated in claims 1 to 9. The food products can be selected from the group consisting of spreads (fat contents of 10 to 90 wt %); dressings; mayonnaises; cheese; ice creams; ice ceam coatings; confectionery coatings; fillings; sauces and culinairy product. Very beneficial food products are the food products with a continous fat phase representing about 10 to 90 wt % of the food product.
Food supplements, comprising an encapsulated amount of the blends according to the invention are also claimed. The encapsulating material is suitably selected from: sugars, carbohydrates, gums, hydrocolloids, proteins and in particular gelatin.

According to a last embodiment of our invention our invention also concerns the process for the making of our novel blends. Therefore part of our invention also is a process for making a blend with the composition according to claims 1 and 9 wherein:
- skins of fruit, in particular skins from apples, cranberries, cherries, prunes or pears are extracted with an organic solvent, in particular selected from the group consisting of ketones, esters, alcohols and hydrocarbons ;
- an extract containing a mixture of ursolic acid and oleanolic acid is isolated ;
- the organic solvent is removed from the extract and a mixture comprising ursolic acid and oleanolic acid is isolated;
- this mixture obtained is dissolved in water or an organic solvent or a mixture thereof, preferably acetone/water in a weight ratio of 50/50 to 95/5 while heating. After the mixture is dissolved the solution obtained is cooled to a temperature of maximum 25 °C and crystals formed are separated as product from the rest; and
- The product is blended with 1-99 wt % of a glyceride mix

### Particulars of our extraction are:

Prior to the extraction, the fruit skins or herbs are dried to humidity lower than 10 wt%, preferably between 2 and 6 wt%. The skins are then powdered with an electric stirrer. Extraction was performed by mixing the particles with an organic solvent using 1 to 1000 kg of solvent per 1 kg of starting material, preferably 10 to 100 kg of solvent per 1 kg of starting material. The organic solvents are selected from the following groups: alkanes, ketones, esters, aldehydes, hydrocarbons, alcohols. Extraction was performed at temperatures between 0°C and boiling temperature (T_{b}) of the organic solvent, preferably at temperatures between T_{b}-10 °C and T_{b}. The residence time for extraction is not less than 5 minutes, preferably between 15 and 60 minutes. After extraction, the remaining particles were filtered and the solvent was evaporated partly or completely. The remaining extract is washed by dissolving it in organic solvents or water or a mixture of these, at temperatures between 0°C and the boiling temperature of the solvent, preferably at temperatures above 20 °C. Washing is performed by contacting the extract and washing solvent for at least 15 minutes, preferably between 30 and 60 minutes. The extract is recovered by crystallisation in organic solvents or water or a mixture of these by cooling to temperatures below 25 °C, preferably at 0°C, followed by filtration of the extract.

The blends can be made by a process wherein the mixture obtained above is mixed in appropriate amounts with a glyceride selected from the glycerides from claims 6 and 7 in amounts appropriate to give the corrrect amounts according to claim 5, whereupon the total blend is homogenised.

### EXAMPLES

### 1. Lab scale extraction

400 g of ground apple skin was mixed with 2 1 acetone. The extraction was performed at 58°C for 3 h while stirring. After extraction the solvent was removed and the product dissolved in a mixture of water/acetone (10:90) by heating up to 60°C. Crystallization was performed at room temperature. After 15 min white crystals were formed which were separated by filtration (20 °C). The second crystallization was at 4°C over night. The crystals were separated by filtration and dried under nitrogen. The content of ursolic acid and oleanolic acid was determined with GC by using cholesterol as an internal standard (example 3).

### 2. Large scale extraction

Extraction was performed in a 180 litre (solvent) crystalliser with a gate-stirrer with hot acetone at 45 - 50°C for about 30 min at ambient pressure. 10 kg ground apple peel/pomace was slurried in 100 l acetone at 35 °C. 10 min was allowed for heating to 45 - 50 °C. After this preheating period, the temperature was kept constant between 45 - 50 °C for about 30 min. After extraction the slurry was led to the A4-filter (pore-size 40 µm) for filtration of the pomace waste. Before feeding the slurry to the filter, the filter was preheated with acetone at 50°C. Filtration was performed by putting up to 1 bar overpressure on the slurry. Filtration of the slurry was performed quickly to prevent crystal formation in the filter cake. The extract of the filtration was sampled to determine the yield and selectivity of the extraction. The evaporation was partly performed in the LUWA evaporator vessel at reduced pressure (50 mbar). Before the product was crystallised from the solvent, the extract product was filtered over a candle filter (10 µm) tc remove the last remaining pomace particles. The remaining solvent (20 l) was evaporated in a separate evaporator/boiler. The dried solid extract was washed with demi-water to remove the water-soluble substances. The extract was washed with demi-water for three times, filtrated and dried overnight in an autoclave at 5-10 mbar pressure. The filtrate was washed with 250 ml demiwater, stirring for 0.5 h at 50°C. The mixture was cooled to 0°C for crystallisation of the product. The product was filtrated over a black ribbon paper filter (10 µm) in a Büchner funnel. The product was resuspended in 250 ml of hexane and stirred for 0.5 h at 60°C. The mixture was cooled to 0°C for crystallization of the product. The product was filtrated over a black ribbon paper filter (10 µm) in a Büchner funnel and dried as described before.

### 3. HPLC analysis

The HPLC analysis to determine the apolar components was performed with the following equipment and conditions:

### Apparatus and equipment

Analytical balance; Alltech Econoshpere Silica HPLC column (150*4.6 mm, 5 µm)
Ternair HPLC pump; HPLC autosampler
Alltech 500 ELSD detector (low gain) drift-tube: 75 °C; Nebulizer: 1.75 L/min

### HPLC analysis

The gradient that is used for this analysis is described in the appendix. This gradient was run without injecting a sample to flush the column before injecting samples. 5 µL of the sample solution was injected into the HPLC system.

### Gradients used for Silica Straight Phase HPLC

| | | |
|---|---|---|
| Solvents | A | hexane/toluene (50/50) |
| | B | toluene/ethylacetate/formic acid (500/200/16) |

**Table 1:**

| Determination of diglycerides | | | |
|---|---|---|---|
| time (min) | flow (mL/min) | A | B |
| initial | 0.9 | 95 | 5 |
| 2 | 0.9 | 95 | 5 |
| 3 | 0.9 | 95 | 5 |
| 5 | 0.9 | 90 | 10 |
| 7 | 0.9 | 75 | 25 |
| 8 | 0.9 | 50 | 50 |
| 15 | 0.9 | 10 | 90 |
| 23 | 0.9 | 10 | 90 |
| 31 | 0.9 | 95 | 5 |
| 35 | 0.9 | 95 | 5 |

### 4. GC analysis

GC analysis to determine the ursolic acid and the low molecular weight components content was performed with the following equipment and conditions:
Injection volume: 0.4 µL (cold-on-column)
Column: Chrompack SIMDIST (10m*0.53mm, 0.1 µm
filmthickness) or: Quadrex DB-5
   (10m*0.53mm, 0.1 µm filmthickness)
Ovenprogram: 1: 120 °C-1 min-20 °C/min, 2: 325 °C-0 min-5.0 °C/min, 3: 350°C-5 min
Detection: FID (360°C)
Carriergas: Hydrogen (column pressure: 15 psi)
Internal standard: Cholesterol

### 5. Taste panel with different extracts

Seven panellists tasted the different extracts.
Objective: Comparison of the taste of the crude extract with the purified extract in a white filling. Reference was the pure white filling.

| | **Intensity score** | | | | | |
|---|---|---|---|---|---|---|
| | 0 | 1 | 2 | 3 | 4 | 5 |
| White Filling | 7 s | | | | | |
| WF + 2 % AE 1 | | | 2 s | 1 s | 1 s | 3 s |
| WF + 2 % AE 2 | 1 s | 1 s | | 2 s | 3 s | |
| WF + 2 % PAE 1 | 4 s | 3 s | | | | |
| WF + 2 % PAE 2 | 3 s | 3 s | 1 s | | | |

0 = No taste at all; 1 = A trace of taste; 2 = Faint taste;
3 = A clear taste; 4 = A strong taste; 5 = A very strong taste; WF = White filling; AE = Apple extract; PAE = Pure apple extract; s = subjects.

The majority of the panellists have tasted a clear negative taste for the crude extract. The purified extracts however, were assessed as tasteless or only had a trace of a taste.

### 6. Ursolic acid extract in an ice cream coating

### Experimental

The recipe for the ice cream coatings was the following:
475 g dark Callebaut 811
25 g Fat

Two different fats were used:

| | |
|---|---|
| A | 25 g Coberine (reference) |
| B | 10 g ursolic acid extract / 15 g Coberine |

Coberine: Cacao butter equivalent

The following characteristics were determined by coating small magnum ice creams.
- Dripping temperature (°C)
- Dripping time (s)
- Drying time (s)
- Coating weight as % of total weight
- Flexibility

### Results

**Table 1**

| Summary of results | | |
|---|---|---|
| Characteristic | Sample A | Sample B |
| Dipping temperature (°C) | 40 | 40 |
| Dripping time (s) | 18 | 12 |
| Drying time (s) | 74 | 62 |
| Coating weight (%) | 38.5 | 46.7 |
| Flexibility¹ | -/+ | ++ |

| | | |
|---|---|---|
| ¹ The flexibility was tested by hitting the ice cream on the table. | | |

Flexibility index:
- ++: = does not break
- +: = difficult to break
- -: = breaks
- --: = breaks easily

### Conclusion

Coating B was found to have a shorter dripping time than coating A. Although the coating weight is higher (and thus coating is thicker) for coating B, the drying time is shorter than for coating A. The coating with the ursolic acid extract showed the least contraction after drying.

### 7. Ursolic acid extract in a filling

A filling was prepared according to the following recipe:
35% fat blend, 10% cacao powder, 7% skimmed milk powder, 48% sugar, 0.5% lecithin.

All the components of the recipe were mixed in a porcelain bowl at a temperature of 55°C. The particles of the mixture were minimised by the use of a mortar. The mixture was cooled to 29°C before depositing in aluminium cups.

The blends to be evaluated were:

| | |
|---|---|
| Equator 75 | Cacao butter stearin |
| POfiv65 | Olein fraction of palm oil with iodine value of 65 |
| PO 60 | Hardened palm oil with melting point of 60°C. |
| SF | Sunflower oil |

| | |
|---|---|
| Equator 75 | Cacao butter stearin |
| POfiv65 | Olein fraction of palm oil with iodine value of 65 |
| PO 60 | Hardened palm oil with melting point of 60°C. |
| SF | Sunflower oil |

The hardness of the three different blends were measurement with the Stevens Texture Analyser (STA) after 24 hours at 20 °C, cone 60°, penetration 2mm:

| | | | |
|---|---|---|---|
| Blend | 1 | 2 | 3 |
| Hardness | 42 | 718 | 501 |

### Conclusion

The blend with ursolic acid extract were found to have better hardness then the reference and the filling with hardened palm oil.

### 8. Ursolic acid in chocolate

| | |
|---|---|
| Sample A | 475 g dark Callebaut + 25 g Coberine |
| Sample B | 475 g Callebaut + 10 g ursolic acid extract + 15 g Coberine |
| Sample C | 475 g dark Callebaut + 10 g PO 60 + 15 g Coberine |

The mixtures were tempered manually at 29°C on a stone table at room temperature. Part of the chocolate was over tempered and then mixed with the non tempered chocolate to achieve a tempered chocolate mixture.

### Heat resistance

Samples (solid chocolate bonbon) are stored during 17 hours at 40 °C.

| | | |
|---|---|---|
| Dimension at 20 °C | All samples | 3.3 x 2.5 cm |
| | | Height 1.9 cm |
| Dimension at 40 °C | Sample A | 6.0 x 5.5 cm |
| | | Height 0.4 - 0.6 cm |
| | Sample B | 3.4 x 2.6 cm |
| | | Height 1.6 - 1.8 cm |
| | Sample C | 5.0 x 4.7 cm |
| | | Height 0.5 - 0.7 cm |

### Hardness

The settings on the Stevens Texture Analyzer were:
Distance :2 mm
Speed : 0.5 mm/sec.

| Characteristic | Sample A | Sample B | Sample C |
|---|---|---|---|
| Hardness | 189 | 234 | 188 |

### Conclusion

The highest heat resistance and hardness was observed with the ursolic acid extract containing sample.

## Claims

1. Blend of a health component and a glyceride, wherein the health component is a mixture comprising ursolic acid and oleanolic acid in a weight ratio of 1:99 to 99:1 preferably 5: 95 to 95:5, most preferably 15:85 to 85:15 wherein the mixture contains less than 20 wt %, preferably less than 10 wt %, most preferably 1 to 6 wt % of the natural apolar and/or low molecular weight components as present in natural extracts for ursolic acid and oleanolic acid, and wherein the blend contains 1-99 wt % of one or more components selected from mono-, di- and triglycerides as the glyceride.

2. Blend according to claim 1 wherein the natural apolar and/or low molecular weight components are the components that provide an off taste to the natural extract and belong to the class of hydrocarbons, alcohols, fatty acids, triglycerides, ketones and carbohydrates.

3. Blend according to claims 1 and 2 wherein the health component is the mixture according to claims 1 and 2 and which blend contains 5 to 80 wt % of one or more components selected from mono-, di-, and triglycerides as the glyceride.

4. Blend according to claims 1-3 wherein the glyceride part displays a solid fat content masured by NMR-pulse on a non-stabilised fat at the temperature indicated of :
5 to 90 at 5 oC
2 to 80 at 20 oC and
less than 15,preferably less than 10 at 35 oC.

5. Blend according to claims 1-4 wherein the blend comprises components A, B and C, wherein:
A = the health component of claims 1 or 2'
B = a solid fat with an N20 of more than 20, preferably more than 45, most preferably more than 60 and
C = a fat having at least 40 wt % of fatty acids with 18 C-atoms and having one to three double bonds, in particular fish oils, fish oil concentrates or conjugated linoleic acid glycerides;
A being present in amounts of more than 0.1 wt %, preferably 0.1 to 20 wt %, most preferably 0.2 to 10 wt % B being present in amounts of 8 to 90 wt %, preferably 25 to 75 wt %, most preferably 40 to 70 wt % and C being present in amounts of 0 to 85 wt %, preferably 15 to 65 wt %, most preferably 20 to 50 wt %.

6. Blend according to claim 5 wherein fat B is selected from the group consisting of palm oil; palm oil fractions; coccoa butter equivalents; palm kernel oil;fractions of palm kernel oil; hardened vegetable oils such as hardened palm oil; hardened fractions of palm oil; hardened soybean oil; hardened sunflower oil; hardened rape seed oil; hardened fractions of soybean oil; hardened fractions of rapeseed oil; hardened fractions of sunflower oil; mixtures of one or more of these oils and interesterified mixtures thereof.

7. Blend according to claim 5 wherein fat C is selected from the group consisting of sunflower oil; olive oil; soybean oil; rape seed oil; palm oil olein; cotton seed oil; olein fractions from vegetable oils; high oleic oil; olein fractions from vegetable oils; high oleic vegetable oils such as HOSF (= high oleic sunflower oil) or HORP (= high oleic rape seed oil), fish oils; fish oil concentrates and CLA-glycerides.

8. Blend according to claim 5, wherein the blend contains a component A that also contains isoflavones and/or flavones in amounts corresponding with 0.005 to 5 % of the total amount of ursolic acid and oleanolic acid.

9. Blend according to claim 5 wherein component A is a component isolated from fruit skins such as skins from apples, pears, cranberries, cherries or prunes.

10. Food products with a fat phase comprising at least partly the blend according to claims 1 to 9.

11. Food products according to claim 10 wherein the food product is selected from the group consisting of spreads (fat contents of 10 to 90 wt %); dressings; mayonnaises; cheese; ice creams; ice ceam coatings; confectionery coatings; fillings; sauces and culinairy products.

12. Food products according to claims 10 and 11 wherein the food product comprises 10 to 90 wt % of a continuous fat phase.

13. Food supplements comprising the blend according to claims 1-9 in encapsulated form.

14. Food supplements according to claim 13, wherein the encapsulating material is selected from: sugars, carbohydrates, gums, hydrocolloids and gelatin.

15. Process for making a blend with the composition according to claims 1 and 9 wherein:
- skins of fruit, in particular skins from apples, cranberries, cherries, prunes or pears are extracted with an organic solvent , in particular selected from the group consisting of ketones, esters, alcohols and hydrocarbons;
- an extract containing a mixture of ursolic acid and oleanolic acid is isolated;
- the organic solvent is removed from the extract and a mixture comprising ursolic acid and oleanolic acid is isolated ;
- this mixture obtained is dissolved in a mixture of water and/or an organic solvent, preferably acetone/water in a weight ratio of 50/50 to 95/5 while heating;
- after the mixture is dissolved the solution obtained is cooled to a temperature of maximum 25 °C and crystals formed are separated as product from the rest; and
- the product is blended with 1-99 wt % of a glyceride mix.

16. Process for making a blend according to claim 15 wherein the product is mixed in appropriate amounts with a glyceride selected from the glycerides from claims 6 and 7 in amounts appropriate to give the corrrect amounts according to claim 5, whereupon the total blend is homogenised.

## Patentansprüche

1. Mischung einer Gesundheltskomponente und eines Glyzerids, wobei die Gesundheltskomponente ein Gemisch ist, das Ursolsaure und Oleanolsäure in einem Gewichtsverhältnis von 1:89 bis 99:1, vorzugsweise 5:95 bis 95:5. am meisten bevorzugt 15:65 bis 85:15 aufweist, wobei das Gemisch weniger als 20 Gewichtsprozent, vorzugsweise weniger als 10 Gewichts-%, am meisten bavorzugt 1 bis 6 Gewichts-% der natürlichen nichtpolaren und/oder niedrigmolekulargewichtigen Komponenten enthält die in natürlichen Extrakten von Ursolsäure und Oleanolsäure vorliegen, und wobei die Mischung 1 bis 99 Gewichts-% von einer oder mehreren Komponenten, die aus Mono-, Di- und Triglyzeriden ausgewählt sind, als das Glyzerid enthält.

2. Mischung nach Anspruch 1, wobei die natürlichen nichtpolaren und/oder niedrigmolekulargewichtigen Komponenten die Komponenten sind, die einen Fehlgeschmack des natürlichen Extrakts vermitteln und zu der Klasse von Kohlenwasserstoffen, Alkoholen, Fettsauren, Triglyzeriden, Kelonen und Kohlenhydraten gehören.

3. Mischung nach Anspruch 1 oder 2, wobei die Gesundheitszusammensetzung das Gemisch gemäß Anspruch 1 und 2 ist und wobei die Mischung 5 bis 80 Gewichts-% einer oder mehrerer Komponenten, die aus Mono-, Di- und Triglyzeriden ausgewählt sind, als das Glyzerid enthält.

4. Mischung nach den Ansprüchen 1 bis 3. wobei der Glyzeridtell einen Festfettgehalt zeigt, der durch NMR-Pulse an einem nichtstabillsierten Fett bei der angegebenen Temperatur gemessen:
5 bis 90 bei 6 °C
2 bis 80 bei 20 °C und
weniger als 15, vorzugsweise weniger als 10, bei 35 °C
beträgt.

5. Mischung nach den Ansprüchen 1 bis 4, wobei die Mischung Komponenten A, B und C aufweist, wobei:
A = die Gesundheitszusammensetzung nach Anspruch 1 oder 2
B = ein festes Fett mit einem N20-Wert von mehr als 20. vorzugsweise mehr als 45, am meisten bevorzugt mehr als 60, und
C = ein Fett mit mindestens 40 Gewichts-% Fettsäuren mit 18 Kohlenstoffatomen und mit 1 bis 3 Doppelbindungen, insbesondere Fischolen, Fischölkonzentraten oder konjugierten Linolsäureglyzeriden;
wobei A in Mengen von mehr als 0,1 Gewichts-%, vorzugsweise 0,1 bis 20 Gewichts-%, am meisten bevorzugt 0,2 bis 10 Gewichts-%, vorliegt,
B in Mengen von 8 bis 90 Gewichts-%, vorzugsweise 25 bis 75 Gewichts-%, am meisten bevorzugt 40 bis 70 Gewichts-%, vorliegt und
C in Mengen von 0 bis 85 Gewichts-%, vorzugsweise 15 bis 66 Gewichts-%, am meisten bevorzugt 20 bis 50 Gewichts-%, vorliegt.

6. Mischung nach Anspruch 5, wobei das Fett B ausgewahlt ist aus der Gruppe, die besteht aus Palmöl, Palmölfraktionen, Kakaobutteräquivalenten, Plamkernöl, Fraktionen von Palmkernöl, gehärteten Pflanzenölen, wie beispielsweise gehärtetem Palmöl, gehärteten Fraktionen von Palmöl, gehartetem Sojaöl, gehartatem Sonnenblumenöl, gehärtetem Rapsöl, gehärteten Fraktionen von Sojaöl, gehärteten Fraktionen von Rapsöl, gehärteten Fraktionen von Sonnenblumenöl, Mischungen von einem oder mehreren dieser Öle und untereinander veresterten Mischungen davon.

7. Mischung nach Anspruch 5, wobei das Fett C ausgewählt ist aus der Gruppe die besteht aus Sonnblumenöl, Olivenöl, Sojaöl, Rapaöl, Palmöl, Olein, Kottanöl, Oleinfraktionen von Pflanzenölen, hocholeinsäurehaltigem Öl, Oleinfraktionen von Pflanzenölen, hocholeinhaltigen Pflanzenölen, wie beispielsweise HOSF (hocholeinsäurehaltiges Sonnenblumenöl) oder HORP (hocholeinsäurehaltiges Rapeöl), Fischölen, Fischölkonzentraten und CLA-Glyzeriden.

8. Mischung nach Anspruch 5, wobei die Mischung eine Komponente A enthält, die auch Isoflavone und/oder Flavone in Mengen enthält, die 0,05 bis 5 % der Gesamtmenge an Ursolsäure und Oleanolsäure entsprechen.

9. Mischung nach Anspruch 5, wobei die Komponente A eine Komponente ist, die aus Obstschalen Isoliert ist, wie beispielsweise Schalen von Apfeln, Birnen, Preiselbeeren, Kirschen oder Pfieumen.

10. Nahrungsmittelprodukt mit einer Fettphase, die zumindest teilweise die Mischung nach dan Ansprüchen 1 bis 9 aufweist.

11. Nahrungsmittelprodukt nach Anspruch 10, wobei das Nahrungsmittelprodukt ausgewählt ist aus der Gruppe, die aus Aufstrichen (Fettgehalt zwischen 10 und 90 Gewichts-%), Dressings, Majonäsen, Käsen, Elscremes, Elscremebeschichtungen, Süßwarenbeschichtungen, Füllungen, Soßen und kulinarischen Produkten besteht.

12. Nahrungsmittelprodukt nach Anspruch 10 und 11, wobei das Nahrungsmittelprodukt 10 bis 90 Gewichts-% einer kontinuierlichen Fettphase aufweist.

13. Nahrungsmittelergänzung, die die Mischung nach Anspruch 1 bis, 9 in eingekapselter Form aufweist.

14. Nahrungsmittelergänzung nach Anspruch 13, wobei des einkapseinde Material ausgewählt ist aus: Zuckern, Kohlenhydraten, Gummis, Hydrokolloiden und Gelatine.

15. Verfahren zur Herstellung einer Mischung mit der Zusammensetzung nach Ansprüchen 1 bis 9, wobei:
- Schalen von Früchten, Insbesondere Schalen von Apfeln, Preiselbeeren, Kirschen, Pflaumen oder Bimen mit einem organischen Lösungsmittel extrahiert werden, das insbesondere ausgewählt Ist aus der Gruppe, die aus Ketonen, Estern, Alkoholen und Kohlenwasserstoffen besteht;
- ein Extrakt, der eine Mischung von Ursolsäure und Oleanolsäure enthält, isoliert wird;
- das organische Lösungsmittel von dem Extrakt entfernt wird und eine Mischung, die Ursolsäure und Oleanolsäure aufweist, isoliert wird,
- die erhaltene Mischung in einer Mischung von Wasser und/oder organischem Lösungsmittel aufgelöst wird, vorzugweise Aceton/Wasser in einem Gewichtsverhältnis von 50:50 bis 95:50, unter Erwärmen;
- nachdem die Mischung aufgelöst ist, die erhaltende Mischung auf eine Temperatur von maximal 25 °C abgekühlt wird und gebildete Kristalle als Produkt von dem Rest entfernt werden und
- das Produkt mit 1 bis 99 Gewichts-% eines Glyzeridgernisches vermischt wird.

16. Verfahren zur Herstellung einer Mischung nach Anspruch 16, wobei das Produkt in geeigneten Mangen mit einem Glyzerid vermischt wird, das von den Glyzeriden aus den Ansprüchen 6 und 7 ausgewählt ist. In Mengen, die geeignet sind, um die korrekten Mengen nach Anspruch 5 zu ergeben, wobei die Gesamtmischung homogenisiert wird.

## Revendications

1. Mélange d'un composant sanitaire et d'un glycéride, dans lequel le composant sanitaire est un mélange comprenant de l'acide ursolique et de l'acide oléanolique en un rapport en poids de 1:99 à 99:1, de préférence de 5:95 à 95:5, de manière préférée entre toutes de 15:85 à 85:15, dans lequel le mélange contient moins de 20% en poids, de préférence moins de 10% en poids, de manière préférée entre toutes de 1 à 6% en poids des composants naturels apolaires et/ou de faible poids moléculaire présents dans des extraits naturels d'acide ursolique et d'acide oléanolique, et dans lequel le mélange contient de 1 à 99% en poids d'un ou plusieurs composants choisis parmi des mono-, di- et triglycérides en tant que glycéride.

2. Mélange selon la revendication 1 dans lequel les composants naturels apolaires et/ou de faible poids moléculaire sont les composants qui confèrent un mauvais goût à l'extrait naturel et appartiennent à la classe des hydrocarbures, des alcools, des acides gras, des triglycérides, des cétones et des hydrates de carbone.

3. Mélange selon les revendications 1 et 2 dans lequel le composant sanitaire est le mélange selon les revendications 1 et 2 et ledit mélange contient de 5 à 80% en poids d'un ou plusieurs composants choisis parmi des mono-, di- et triglycérides en tant que glycéride.

4. Mélange selon les revendications 1 à 3 dans lequel la partie de glycéride présente une teneur en graisses solides mesurée par RMN à impulsions sur une graisse non stabilisée à la température indiquée de
5 à 90 à 5°C
2 à 80 à 20°C et
moins de 15, de préférence moins de 10 à 35°C.

5. Mélange selon les revendications 1 à 4 dans lequel le mélange comprend des composants A, B et C, dans lequel :
A = le composant sanitaire des revendications 1 ou 2
B = une graisse solide avec un N20 de plus de 20, de préférence de plus de 45, de manière préférée entre toutes de plus de 60 et
C = une graisse ayant au moins 40% en poids d'acides gras avec 18 atomes C et ayant d'une à trois doubles liaisons, en particulier des huiles de poisson, des concentrés d'huile de poisson ou des glycérides d'acide linoléique conjugués ;
A étant présent en des quantités de plus de 0,1% en poids, de préférence de 0,1 à 20% en poids, de manière préférée entre toutes de 0,2 à 10% en poids
B étant présent en des quantités de 8 à 90% en poids, de préférence de 25 à 75% en poids, de manière préférée entre toutes de 40 à 70% en poids et
C étant présent en des quantités de 0 à 85% en poids, de préférence de 15 à 65% en poids, de manière préférée entre toutes de 20 à 50% en poids.

6. Mélange selon la revendication 5 dans lequel la graisse B est choisie dans le groupe consistant en l'huile de palme ; des fractions d'huile de palme ; des équivalents de beurre de cacao ; l'huile de palmiste ; des fractions d'huile de palmiste ; des huiles végétales hydrogénées telles que l'huile de palme hydrogénée ; des fractions hydrogénées d'huile de palme ; l'huile de soja hydrogénée ; l'huile de tournesol hydrogénée ; l'huile de colza hydrogénée ; des fractions hydrogénées d'huile de soja ; des fractions hydrogénées d'huile de colza ; des fractions hydrogénées d'huile de tournesol ; des mélanges d'une ou plusieurs de ces huiles et des mélanges inter-estérifiés de celles-ci.

7. Mélange selon la revendication 5 dans lequel la graisse C est choisie dans le groupe consistant en l'huile de tournesol ; l'huile d'olive ; l'huile de soja ; l'huile de colza ; l'oléine d'huile de palme ; l'huile de coton ; des fractions d'oléine d'huiles végétales ; des huiles végétales riche en acide oléique telles que HOSF (huile de tournesol riche en oléique) ou HORP (huile de colza riche en acide oléique) ; des huiles de poisson ; des concentrés d'huile de poisson et des CLA-glycérides.

8. Mélange selon la revendication 5, dans lequel le mélange contient un composant A qui contient en outre des isoflavones et/ou des flavones en des quantités correspondant à 0,005 à 5% de la quantité totale d'acide ursolique et d'acide oléanolique.

9. Mélange selon la revendication 5 dans lequel le composant A est un composant isolé à partir de peaux de fruits telles que des peaux de pommes, de poires, de canneberges, de cerises ou de prunes.

10. Produits alimentaires avec une phase grasse comprenant au moins partiellement le mélange selon les revendications 1 à 9.

11. Produits alimentaires selon la revendication 10 dans lesquels le produit alimentaire est choisi dans le groupe consistant en des pâtes à tartiner (teneurs en graisse de 10 à 90% en poids) ; des assaisonnements ; des mayonnaises ; le fromage ; des crèmes glacées ; des enrobages pour crèmes glacées ; des enrobages de confiserie ; des farces ; des sauces et des produits culinaires.

12. Produits alimentaires selon les revendications 10 et 11 dans lesquels le produit alimentaire comprend de 10 à 90% en poids d'une phase grasse continue.

13. Compléments alimentaires comprenant le mélange selon les revendications 1 à 9 sous forme encapsulée.

14. Compléments alimentaires selon la revendication 13, dans lesquels le matériau d'encapsulation est choisi parmi : des sucres, des hydrates de carbone, des gommes, des hydrocolloïdes et la gélatine.

15. Procédé pour préparer un mélange ayant la composition selon les revendications 1 et 9 dans lequel :
- des peaux de fruit, en particulier des peaux de pommes, de canneberges, de cerises, de prunes ou de poires sont extraites avec un solvant organique, en particulier choisi dans le groupe consistant en des cétones, des esters, des alcools et des hydrocarbures ;
- un extrait contenant un mélange d'acide ursolique et d'acide oléanolique, est isolé ;
- le solvant organique est éliminé de l'extrait et un mélange comprenant l'acide ursolique et l'acide oléanolique est isolé ;
- ce mélange obtenu est dissous dans un mélange d'eau et/ou d'un solvant organique, de préférence acétone/eau en un rapport en poids de 50/50 à 95/5 sous chauffage ;
- une fois que le mélange est dissous, la solution obtenue est refroidie à une température maximale de 25°C et les cristaux formés sont séparés du reste en tant que produit ; et
- le produit est mélangé avec 1 à 99% d'un mélange de glycérides.

16. Procédé pour préparer un mélange selon la revendication 15 dans lequel le produit est mélangé en des quantités appropriées avec un glycéride choisi parmi les glycérides des revendications 6 et 7 en des quantités appropriées pour obtenir les quantités correctes selon la revendication 5, après quoi le mélange total est homogénéisé.
